Europäisches Patentamt

European Patent Office

Office européen des brevets

(11) Veröffentlichungsnummer: 0 170 925
A1

(12) EUROPÄISCHE PATENTANMELDUNG

(21) Anmeldenummer: 85108604.1

(22) Anmeldetag: 10.07.85

(51) Int. Cl.⁴: H 01 H 9/56, H 03 K 17/13

(30) Priorität: 25.07.84 DE 3427478

(43) Veröffentlichungstag der Anmeldung: 12.02.86
Patentblatt 86/7

(84) Benannte Vertragsstaaten: AT BE CH DE FR GB IT LI NL SE

(71) Anmelder: Siemens Aktiengesellschaft, Berlin und München Wittelsbacherplatz 2, D-8000 München 2 (DE)

(72) Erfinder: Wimmer, Gerhard, Lindenstrasse 28, D-8411 Waldetzenberg (DE)

(54) Verfahren und Einrichtung zum Schalten von Lasten unter Vermeidung hoher Einschaltstromspitzen.

(57) Die Erfindung betrifft ein Verfahren zum Schalten von kapazitiven Lasten in Wechselstromnetzen. Es ist vorgesehen, daß der Spannungsnulldurchgang (t2) der Netzspannung (50) ermittelt wird und synchronisiert hierzu im Spannungsnulldurchgang (t2) geschaltet wird. Ein Verbraucher (1) in einem Wechselstromnetz ist in Serienschaltung mit einem mechanischen Lastschalter (6) angeordnet. Dabei ist zur Durchführung des Verfahrens vorgesehen, daß in einem ersten Zweig zwischen netzseitigen Anschlußklemmen (1 und 2) ein Handschalter (7), ein Relais (8) und ein elektronischer Schalter (9) in Serienschaltung angeordnet sind. Das Relais (8) steht mit dem Lastschalter (6) in Eingriffverbindung. In einem zweiten Zweig parallel zum ersten Zweig ist ein Nullpunktdetektor (10) angeordnet, der mit dem Steuereingang des elektronischen Schalters (9) in Verbindung steht und diesen um die Ansprechzeit des Relais (8) vor dem Spannungsnulldurchgang (t2) der Netzspannung (50) auf Durchlaß schaltet. Nach Schließen des Handschalters (7) wird sonach der Lastschalter (6) zeitverzögert im nächsten Spannungsnulldurchgang (t2) der Netzspannung (50) geschlossen.

0170925

Siemens Aktiengesellschaft
Berlin und München

Unser Zeichen
VPA 84 P 3276 E

Verfahren und Einrichtung zum Schalten von Lasten
unter Vermeidung hoher Einschaltstromspitzen

Die Erfindung betrifft ein Verfahren zum Schalten von
kapazitiven Lasten in Wechselstromnetzen.

In Wechselstromnetzen mit kapazitiver Last können im
Einschaltmoment sehr hohe Stromspitzen auftreten. Dadurch wird das Schaltglied so stark belastet, daß seine
Kontakte verschweißen können.

Es ist schon vorgeschlagen worden, gegen ein Verschweißen
der Kontakte unempfindliche und daher bezogen auf die
zu schaltende Last stark überdimensionierte Schaltglieder zu verwenden. So werden beispielsweise zum
Schalten von Leuchtstofflampen statt einfacher Relais
Schütze benötigt.

Um Störungen durch defekte Schalter zu vermeiden, finden
hierbei also robuste Schalter Verwendung. Diese sind
größer als es zum Schalten der Nennlast nötig wäre.
Damit verbunden ist ein erhöhter Raumbedarf im Schaltergehäuse.

Der Erfindung liegt die Aufgabe zugrunde, ein Verfahren
und eine Einrichtung zum Schalten kapazitiver Lasten
in Wechselstromnetzen zu entwickeln, die mit möglichst

20.07.1984 Mnl 2 Ant

einfach konstruierten Schaltern auskommt und trotzdem auch bei hohen Einschaltstromspitzen immer zuverlässig arbeitet.

Diese Aufgabe wird erfindungsgemäß dadurch gelöst, daß der Spannungsnulldurchgang der Netzspannung ermittelt wird und synchronisiert hierzu im Spannungsnulldurchgang geschaltet wird.

Im Spannungsnulldurchgang fließt beim Einschalten in einem Wechselstromkreis kein Strom. Wenn man daher einen Schalter genau dann betätigt, wenn die Leitung spannungslos ist, sind auch Stromspitzen im Schaltzeitpunkt ausgeschlossen. Sonach reicht ein kleiner Schalter oder ein einfaches Relais zum Schalten des Wechselstromnetzes aus.

Es wird der Vorteil erzielt, daß die Schaltglieder ohne hohe Einschaltstromspitzen zuverlässig arbeiten.

Eine Einrichtung zur Durchführung des erfindungsgemäßen Verfahrens weist einen Verbraucher in einem Wechselstromnetz auf, der mit einem mechanischen Lastschalter in Serienschaltung durch diesen geschaltet wird. In einem ersten Zweig zwischen den netzseitigen Anschlußklemmen sind ein Handschalter, ein Relais, das mit dem Lastschalter in Eingriffverbindung steht, und ein elektronischer Schalter mit seiner Laststrecke in Serienschaltung angeordnet. In einem zweiten hierzu parallelen Zweig ist ein Nullpunktdetektor mit einer Zeitverzögerungseinrichtung angeordnet, der mit dem Steuerausgang des elektronischen Schalters in Verbindung steht und diesem um die Ansprechzeit des Relais vor dem Spannungsnulldurchgang der Netzspannung ein Schaltsignal zuführt.

Mit dieser Einrichtung nach der Erfindung wird bei geschlossenem Handschalter das Relais durch den Nullpunktdetektor mit Zeitverzögerungseinrichtung und den
elektronischen Schalter erst dann an Spannung gelegt,
wenn unter Berücksichtigung der Ansprechzeit des Relais
gewährleistet ist, daß der Schalter im Lastkreis exakt
im Spannungsnulldurchgang geschaltet wird.

Nach einer Ausgestaltung der Erfindung weist der Nullpunktdetektor eine Serienschaltung aus Kondensatornetzteil und Gleichrichter auf, die ein gleichgerichtetes
und um 90° zur Netzspannung phasenverschobenes Signal
abgibt. Der Ausgang des Gleichrichters steht mit einem
Schwellwertschalter in Verbindung, der das gleichgerichtete Signal mit einem vorgegebenen Schwellwert vergleicht und von einem ersten Durchlauf des Schwellwertes bis zu einem darauffolgenden Durchlauf an seinem
Ausgang einen Rechteckimpuls abgibt. Sonach wird dann
ein Rechteckimpuls abgegeben, wenn das Vorzeichen der
Differenz von gleichgerichtetem Signal und Schwellwert
übereinstimmt. Der Ausgang des Schwellwertschalters
ist mit einem ersten Eingang eines Flip-Flops verbunden,
dessen zweiter Eingang mit einem Signalgenerator für
ein Schaltsignal in Verbindung steht. Wenn eine Flanke
eines Rechteckimpulses am ersten Eingang ansteht, wird
das Schaltsignal am Ausgang des Flip-Flops zeitversetzt
als synchronisiertes Schaltsignal abgegeben. Der Ausgang
des Flip-Flops führt das synchronisierte Schaltsignal über eine Steuerleitung der Basis eines Transistors zu, der als elektronischer Schalter arbeitet und in dessen Kollektor-Emitterkreis als Arbeitsebene das Relais zum Schalten des Lastkreises angeordnet ist. Das synchronisierte Schaltsignal schaltet dann den elektronischen Schalter um die Ansprechzeit des Relais vor dem Spannungsnulldurchgang der Netzspannung durch. Bei bekannter Ansprechzeit des Relais wird der gewünschte Schaltzeitpunkt genau eingehalten.

Nach einer Weiterbildung ist der Schwellwert des Schwellwertschalters variabel. Dadurch wird der Vorteil erzielt, durch geeignete Wahl des Schwellwertes auch Relais mit anderer Ansprechzeit ansteuern zu können.

Um die Einrichtung auf eine andere Ansprechzeit des Relais abstimmen zu können, kann darüber hinaus der Schwellwertschalter an seinem Ausgang dann Rechteckimpulse abgeben, wenn entweder das gleichgerichtete Signal den Schwellwert unterschreitet, oder wenn es den Schwellwert überschreitet.

Zum Abstimmen der Einrichtung ist es außerdem möglich, das Flip-Flop entweder durch die positive Flanke des Rechteckimpulses am ersten Eingang oder durch dessen negative Flanke zu schalten.

Die genannten Weiterbildungen können entsprechend auch kombiniert eingesetzt werden.

Die Erfindung soll anhand eines in der Zeichnung grob schematisch wiedergegebenen Ausführungsbeispieles näher erläutert werden:

Fig. 1    veranschaulicht ein Schaltbild einer Einrichtung zur Durchführung des erfindungsgemäßen
Verfahrens.

Fig. 2    zeigt ein Schaltbild eines Ausführungsbeispieles
der Einrichtung zur Durchführung des erfindungsgemäßen Verfahrens.

Fig. 3    zeigt den Verlauf des Potentials U an verschiedenen Punkten der Schaltungsanordnung
in Abhängigkeit von der Zeit t.

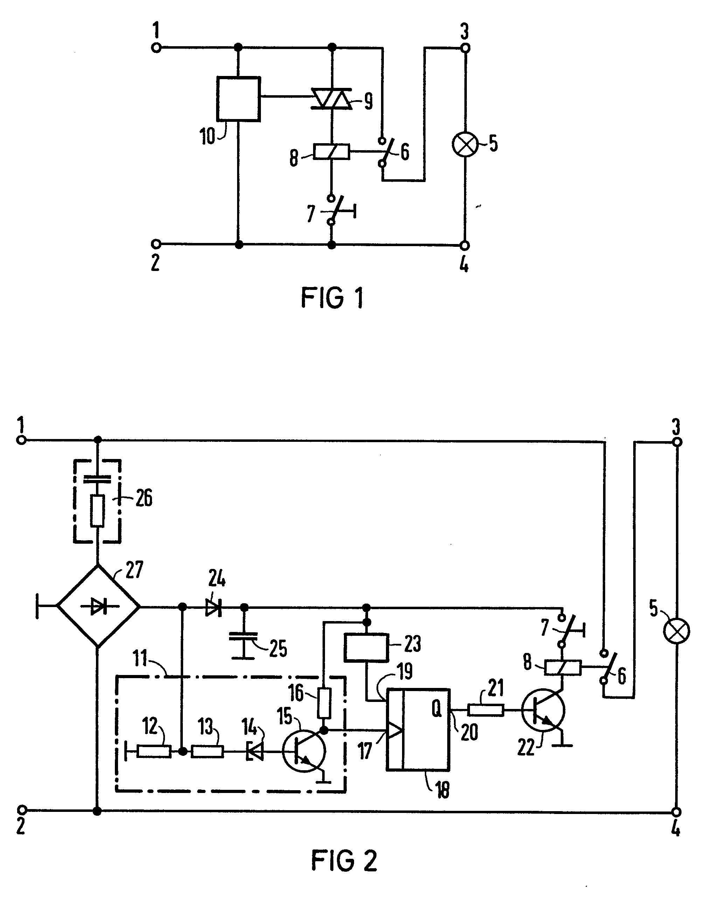

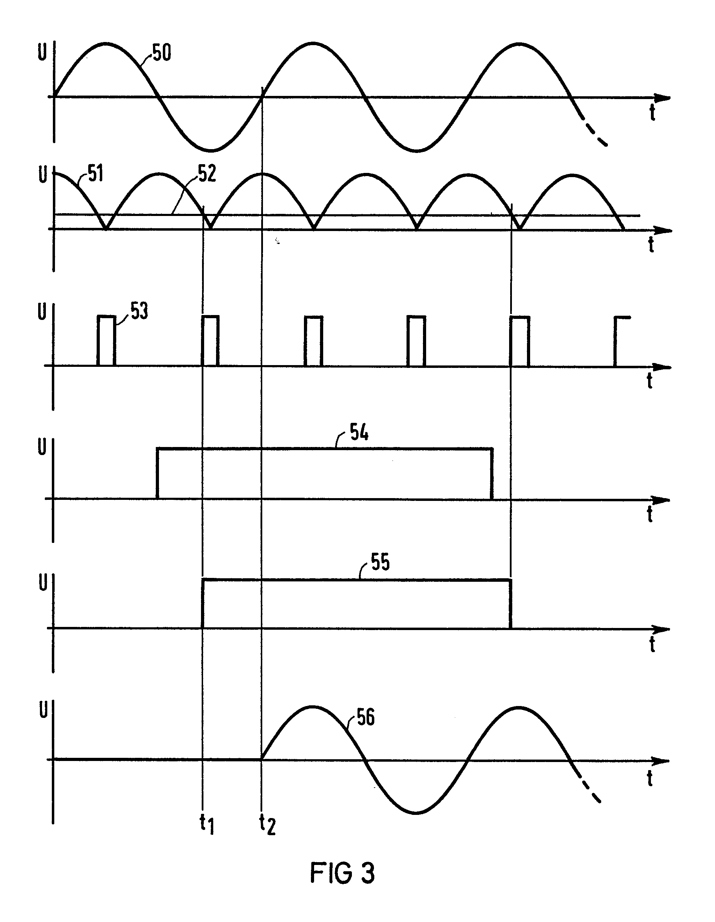

Eine Einrichtung zum Schalten von kapazitiven Lasten
nach Fig. 1 ist in einem Wechselstromnetz mit Netzanschlüssen 1 und 2 verbunden und weist Anschlüsse 3 und 4
für einen Verbraucher, beispielsweise eine Leuchtstofflampe 5 auf. Ein mechanischer Lastschalter 6 schaltet
die Leuchtstofflampe 5 ein. Damit hohe Stromspitzen beim
Schalten des Lastschalters 6 verhindert werden, wird
der Lastschalter 6 immer im Spannungsnulldurchgang der
Netzspannung 50 nach Fig. 3 geschaltet.

Dazu sind in einem ersten Zweig zwischen den Netzanschlüssen 1 und 2 ein Handschalter 7, ein Relais 8
und ein elektronischer Schalter 9 mit seiner Laststrecke angeordnet. Das Relais 8 steht mit dem Lastschalter 6 in Eingriffverbindung, so daß bei stromführendem Relais 8 der Lastschalter 6 geschlossen und
die Leuchtstofflampe 5 im Betrieb ist.

In einem zweiten Zweig zwischen den Netzanschlüssen 1 und 2 parallel zum ersten Zweig ist ein Nullpunktdetektor 10 mit Zeitverzögerungseinrichtung angeordnet, der mit dem elektronischen Schalter 9 in Verbindung steht. Der Nullpunktdetektor 10 erkennt den Spannungsnulldurchgang am Netzanschluß 1 und schließt den elektronischen Schalter 9 um die Ansprechzeit des Relais 8 vor dem Nulldurchgang der Netzspannung 50. Dadurch wird gewährleistet, daß der Lastschalter 6 im Spannungsnulldurchgang der Netzspannung 50 geschaltet wird, wodurch Stromspitzen beim Schalten nicht auftreten können.

Der Nullpunktdetektor 10 weist nach Fig. 2 eine Serienschaltung aus Kondensatornetzteil 26 und Spannungsgleichrichter 27 in Verbindung mit dem Netzanschluß 1 auf. Der Gleichrichter 27 gibt ein gleichgerichtetes und um $90^{o}$ gegenüber der Netzspannung 50 phasenverschobenes Signal 51 ab. Man vergleiche Fig. 3. Dabei wird die Phasenverschiebung durch das Kondensatornetzteil 26 bewirkt.

Der Ausgang des Gleichrichters 27 steht mit einer Diode 24 und einem Kondensator 25 zum Glätten der pulsierenden Gleichspannung 51 in Verbindung. Das geglättete positive Potential versorgt die elektronischen Bauteile der Einrichtung.

Der Ausgang des Gleichrichters 27 ist außerdem mit einem Schwellwertschalter 11 verbunden, der das gleichgerichtete Signal 51 mit einem vorgegebenen Schwellwert 52 vergleicht. Der Schwellwertschalter 11 weist*

*zwei ohmsche Widerstände 12 und 13 und eine Tunneldiode 14 in Serienschaltung auf. Durch die Wahl der Tunneldiode 14 wird
der Schwellwert 52 bestimmt. Die Tunneldiode 14 ist mit
der Basis eines Transistors 15 verbunden, dessen Kollektor
über einen ohmschen Widerstand 16 am positiven Potential
und dessen Emitter am Nullpotential liegt. Wenn das
gleichgerichtete Signal 51 den Schwellwert 52 überschreitet, ist der Transistor 15 durchlässig. Für die
Dauer des Unterschreitens des vorgegebenen Schwellwertes 52 durch das gleichgerichtete Signal 51 ist der
Transistor 15 gesperrt und an einem Abgriff zwischen
dem Kollektor des Transistors 15 und dem ohmschen Widerstand 16 steht dann ein Rechteckimpuls 53 nach Fig. 3
an.

Dieses Ausgangssignal 53 des Schwellwertschalters 11
wird einem ersten Eingang 17 eines Flip-Flops 18 zugeführt. Der zweite Eingang 19 des Flip-Flops 18 nach
Fig. 2 ist mit einem Signalgenerator 23 verbunden, der
am positiven Potential liegt und ein Schaltsignal 54
abgibt. Man vergleiche Fig. 3. Der Signalgenerator 23
kann beispielsweise einen Fernsteuerempfänger aufweisen. Wenn die positive Flanke der Rechteckimpulse 53
am ersten Eingang 17 des Flip-Flops 18 ansteht, wird
das Schaltsignal 54 zeitlich verzögert als synchronisiertes Schaltsignal 55 am Ausgang 20 des Flip-Flops 18
abgegeben.

Der Ausgang 20 des Flip-Flops 18 steht nach Fig. 2
über einen ohmschen Widerstand 21 mit der Basis eines
Transistors 22 in Verbindung. Dieser Transistor 22
entspricht in seiner Funktion dem elektronischen
Schalter 9 nach Fig. 1. Im Kollektor-Emitterkreis des Transistors 22 sind Handschalter 7 und Relais 8 zum Schalten des Lastkreises angeordnet. Durch geeignete Wahl des Schwellwertes 52 und der Schaltflanke des Flip-Flops 18 wird bewirkt, daß der Transistor 22 zu einem Zeitpunkt t1, der um die Ansprechzeit des Relais 8 vor dem Zeitpunkt t2 des Spannungsnulldurchganges der Netzspannung 50 liegt, durchgeschaltet wird.

Sonach wird der Lastschalter 6 nach Fig. 1 und 2 durch das Relais 8 exakt im Nulldurchgang der Netzspannung 50 geschaltet, was hohe Stromspitzen beim Schalten unmöglich macht. Man vergleiche den Spannungsverlauf 56 am mechanischen Lastschalter 6 nach Fig. 3.

3 Patentansprüche
3 Figuren

Patentansprüche

1) Einrichtung zum Schalten von kapazitiven Lasten in Wechselstromnetzen im Spannungsnulldurchgang der Netzspannung, wobei ein Nullpunktdetektor einen elektronischen Schalter zum Beaufschlagen eines Relais (8) zum Betätigen eines mechanischen Schalters (6) ein um die Ansprechzeit des Relais (8) zeitlich vor dem Spannungsnulldurchgang der Netzspannung liegendes Schaltsignal zuführt,

d a d u r c h   g e k e n n z e i c h n e t,

daß in einem Zweig zwischen den netzseitigen Anschlußklemmen (1 und 2) ein Handschalter (7), ein Relais (8), das mit dem mechanischen Lastschalter (6) in Eingriffverbindung steht, und ein elektronischer Schalter (9: 21 und 22) mit seiner Laststrecke in Serienschaltung angeordnet sind, und daß der Nullpunktdetektor mit einer Zeitverzögerungseinrichtung mit dem Steuereingang des elektronischen Schalters (9) in Verbindung steht.

2) Einrichtung nach Anspruch 1,

d a d u r c h   g e k e n n z e i c h n e t,

- daß der Nullpunktdetektor (10) eine Serienschaltung aus einem Kondensatornetzteil (26) und einem Gleichrichter (27) aufweist, die ein gleichgerichtetes und um 90° zur Netzspannung phasenverschobenes Signal (51) abgibt,
- daß der Ausgang des Gleichrichters (27) mit einem Schwellwertschalter (11) in Verbindung steht, der das gleichgerichtete Signal (51) mit einem vorgegebenen Schwellwert (52) vergleicht und an seinem Ausgang von einem ersten Durchlauf des Schwellwertes (52) bis zu einem darauffolgenden Durchlauf einen Rechteckimpuls (53) abgibt,
- daß der Ausgang des Schwellwertschalters (11) mit

No 2 Th / 29.05.1985

einem ersten Eingang (17) eines Flip-Flops (18) verbunden ist, dessen zweiter Eingang (19) mit einem Signalgenerator (23) für ein Schaltsignal (54) in Verbindung steht, und bei einer Flanke eines Rechteckimpulses (53) am ersten Eingang (17) des Flip-Flops (18) ein synchronisiertes Schaltsignal (55) zeitverzögert am Ausgang (20) des Flip-Flops (18) abgegeben wird und

- daß der Ausgang (20) des Flip-Flops (18) das synchronisierte Schaltsignal (55) über eine Steuerleitung der Basis eines Transistors (22) zuführt, der als elektronischer Schalter (9) arbeitet, und in dessen Kollektor-Emitterkreis als Laststrecke das Relais (8) zum Schalten des Lastkreises angeordnet ist.

3) Einrichtung nach Anspruch 1,
d a d u r c h   g e k e n n z e i c h n e t,
daß der Schwellwert (52) des Schwellwertschalters (11) veränderbar ist.

0170925

84 P 3276

FIG 1

FIG 2

FIG 3

Europäisches
Patentamt

EUROPÄISCHER RECHERCHENBERICHT

0170925
Nummer der Anmeldung

EP 85 10 8604

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| Y | EP-A-0 108 538  (HAWKER)<br>* Insgesamt * | 1-3 | H 01 H    9/56<br>H 03 K   17/13 |
| | --- | | |
| Y | DE-A-3 236 733  (TELEFUNKEN)<br>* Insgesamt * | 1 | |
| | --- | | |
| Y | EP-A-0 034 448  (CLAUDE LYONS)<br>* Seite 2, Absatz 4; Seite 3, Absätze 6-8; Seite 4, letzter Absatz - Seite 5, Absatz 2; Seite 5, Zeile 35 - Seite 7, Absatz 3; Patentansprüche 1,8-12 * | 2 | |
| A | | 1 | |
| | --- | | |
| Y | DE-B-2 806 628  (DIEHL)<br>* Insgesamt * | 3 | RECHERCHIERTE SACHGEBIETE (Int. Cl. 4) |
| A | | 1 | H 01 H    9/00<br>H 01 H   47/00<br>H 01 H   33/00<br>H 03 K   17/00 |
| | --- | | |
| A | FR-A-2 488 036  (LANDIS)<br>* Insgesamt * | 1,2 | |
| | --- | | |
| A | DE-A-2 232 026  (SCHALTBAU)<br>* Seite 3, Absatz 3 - Seite 4 * | 1,2 | |
| | --- | | |
| A | US-A-3 265 933  (PERRY)<br>* Insgesamt * | 1,2 | |
| | ---                          -/- | | |

Der vorliegende Recherchenbericht wurde für alle Patentansprüche erstellt.

| Recherchenort<br>DEN HAAG | Abschlußdatum der Recherche<br>04-11-1985 | Prüfer<br>DESMET W.H.G. |
|---|---|---|

![Europäisches Patentamt] **Europäisches Patentamt**

**EUROPÄISCHER RECHERCHENBERICHT**

0170925
Nummer der Anmeldung

EP 85 10 8604

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | GB-A-2 090 702 (GENERAL ELECTRIC) <br><br> --- | | |
| A | ELECTRONIC DESIGN, Band 16, Nr. 1, 4. Januar 1968, Seiten 144,144A, Rochelle Park, US; R. BILLON: "Zero-crossing detector needs no supply voltage" <br><br> --- | | |
| A | ELECTRONIC DESIGN, Band 14, 4. Juli 1968, Seiten 82-85, Rochelle Park, US; T.H. LYNCH: "Cross zero with a tunnel-diode switch" <br><br> ----- | | |

| | | | RECHERCHIERTE SACHGEBIETE (Int. Cl.4) |
|---|---|---|---|

Der vorliegende Recherchenbericht wurde für alle Patentansprüche erstellt.

| Recherchenort DEN HAAG | Abschlußdatum der Recherche 04-11-1985 | Prüfer DESMET W.H.G. |
|---|---|---|